Europäisches Patentamt

European Patent Office

Office européen des brevets

(11) Veröffentlichungsnummer: **0 380 663**
**A1**

(12) **EUROPÄISCHE PATENTANMELDUNG**
veröffentlicht nach Art. 158 Abs. 3
EPÜ

(21) Anmeldenummer: 88905037.3

(22) Anmeldetag: 30.03.88

(86) Internationale Anmeldenummer:
PCT/SU88/00077

(87) Internationale Veröffentlichungsnummer:
WO 89/09424 (05.10.89 89/24)

(51) Int. Cl.5: **G02B 27/30, F21V 5/00**

(43) Veröffentlichungstag der Anmeldung:
08.08.90 Patentblatt 90/32

(84) Benannte Vertragsstaaten:
**DE FR GB IT NL SE**

(71) Anmelder: **NAUCHNO-PROIZVODSTEVENNOE OBIEDINENIE PO AVTOELEKTRONIKE I AVTOTRAKTORNOMU ELEKTROOBORUDOVANIJU**
ul. Kirpichnaya, 39-41
Moscow, 105187(SU)

(72) Erfinder: **RESHETIN, Evgeny Fedorovich**
5 ul. Sokolinoi gory, 19-96
Moscow, 105275(SU)

(74) Vertreter: **Patentanwälte Beetz sen. - Beetz jun. Timpe - Siegfried - Schmitt-Fumian**
Steinsdorfstrasse 10
D-8000 München 22(DE)

(54) **KOLLIMATOR.**

(57) Der Kollimator besteht aus einem Konkavreflektor (1) und einem Refraktor (2) in Form einer im Reflektor (1) untergebrachten stufenförmigen Linse kleineren Durchmessers, die an der Innenseite ihrer Tragschicht Fresnel-Ringe (7) besitzt. Die aus dem Brennpunkt (F) des Kollimators kommenden Lichtstrahlen werden von verschiedenen Flächen (8, 9) eines jeden Ringes (7) in solcher Weise gebrochen, daß Strahlen (13) vom Refraktor (2) unmittelbar entlang der Kollimatorachse (00'), Strahlen (14) aber auf den Reflektor (1) gelenkt werden, wonach sie ebenfalls entlang der Kollimatorachse laufen. Der Kollimator besitzt einen hohen Wirkungsgrad bei günstigem Verhältnis seiner Abmessungsgrößen.

FIG. 1

## Technisches Gebiet

Die Erfindung bezieht sich auf die Lichttechnik, genauer auf einen Kollimator als optisches Element von Leuchten und Scheinwerfern.

Ein wichtiger Parameter eines Leuchtapparates ist sein Wirkungsgrad. Der Wirkungsgrad eines Leuchtapparates gerichteter Wirkung hängt vom Lichtstrom-Nutzfaktor der Quelle im Kollimator ab, der zur Umwandlung der auseinanderlaufenden Lichtquellenstrahlen in die gerichtete Strahlung des Leuchtapparates bestimmt ist. Dank einem großen Raumerfassungswinkel der Lichtquelle durch die Arbeitsfläche des Kollimators kann der Lichtstrom- -Nutzfaktor in gemischten optischen Systemen (die Lichtreflexions- und -brechungselemente einschließen) sehr hoch (bis 100 %) sein, was jedoch in den bekannten Einrichtungen zur Beeinträchtigung von Abmessungsgrößen führt.

Ein mit einem umfassenden Einsatz von Leuchtapparaten, beispielsweise in der Kraftfahrzeugindustrie, zusammenhängendes Problem besteht im Steigern des Wirkungsgrades dieser Apparate ohne Zunahme von Axialabmessungen des Kollimators sowie ohne Abnahme des Abstandes zwischen dessen Arbeitsfläche und der Lichtquelle (da ein kleinerer Abstand höhere Anforderungen an die Hitzefestigkeit des Werkstoffs des Kollimators bedingt, dessen Arbeitsfläche sich infolge ihrer Nähe an der thermischen Lichtquelle erhitzt). Es ist ferner von Bedeutung, daß ein hoher Wirkungsgrad bei optimalen Abmessungsgrößen durch hinreichend fertigungsgerechte Mittel gewährleistet wäre die vom Standpunkt der Massenproduktion aus annehmbar sind.

## Zugrundeliegender Standes der Technik

Es ist ein Kollimator (SU, A, Nr. 7151), bekannt der einen Konkavreflektor, dessen Vorderteil sich vor seiner, Brennebene befindet, sowie eine in dessen Innerem untergebrachte Sammellinse enthält, die an sich keinen ausreichenden Erfassungswinkel und keine vollständige Ausnutzung des Lichtstroms der Quelle gewährleisten und deswegen durch Ringreflektoren ergänzt sind. Die Ringreflektoren befinden sich zwischen der Linse und dem Hauptreflektor und machen die Kollimatorkonstruktion recht kompliziert.

Konstruktiv einfacher ist ein Scheinwerferkollimator (US, A, 2.253.409), in dem eine im Innern eines Reflektors vorhandene Sammellinse eine konkave stufenförmige Innenfläche besitzt, d.h. den Erfassungswinkel derselben erweiternde prismatische Fresnel-Ringe an der Innenfläche der Linsentragschicht enthält. Der Wirkungsgrad dieses Kollimators kann auch ohne Zuhilfenahme von zusätzlichen Ringreflektoren hoch sein, aber seine Axialabmessungen sind sehr groß, während die Linsenoberfläche nahe an der Lichtquelle liegt, was die Lichtverteilung des Scheinwerfers verschlechtert und die Verwendung von ganzgepreßten Linsen aus leichtschmelzenden Werkstoffen (Kunstoffen) verhindert.

Offenbarung der Erfindung

Der vorliegenden Erfindung liegt die Aufgabe zugrunde, einen Kollimator zu schaffen, in dem die konstruktive Ausführung des Konkavreflektors und der in der Tiefe desselben angeordneten stußenförmigen Sammellinse eine Erweiterung des Nutzerfassungswinkels der Lichtquelle bei kleinerem Verhältnis der Axialabmessungen des Reflektors zum Abstand zwischen der Linsenoberfläche und dem Kollimatorbrennpunkt gewährleisten würde.

Die gestellte Aufgabe wird dadurch gelöst, daß im Kollimator, der einen Reflektor, bei dem zumindest dessen Vorderteil sich vor seiner Brennebene befindet, sowie eine im Innern des Reflektors untergebrachte stufenförmige Linse enthält, die an der konkaven, dem Kollimatorbrennpunkt zugekehrten Innenseite ihrer Tragschicht Fresnel-Ringe besitzt, von denen jeder eine brechende Haupteintrittsfläche sowie eine Übergangsfläche aufweist, erfindungsgemäß die Übergangsflächen der Fresnel-Ringe zusätzliche brechende Eintrittsflächen darstellen und in bezug auf die entsprechenden Abschnitte der konvexen Tragschichtoberfläche der stufenförmigen Linse unter Winkeln liegen, die ausgehend von der Bedingung gewählt sind, die optische Abstimmung des Kollimatorbrennpunktes und des Vorderteiles des Reflektors sicherzustellen (d.h. das Fresnel-Ring-System lenkt einen Teil von Brennstrahlen auf den Reflektor zum nachfolgenden Reflektieren derselben entlang der Kollimatorachse ab).

Diese Konstruktion gestattet es dank der Nutzverwertung der Lichtquellenstrahlen, die auf die Übergangsflächen der Fresnel-Ringe der Sammellinse einfallen, den Erfassungswinkel, derselben ohne ihre Annäherung an die Lichtquelle zu vergrößern, die Abmessungen des Reflektors aber zu vermindern und hierdurch die Abmessungsgrößen des gesamten Kollimators bei einem höheren Lichtstrom-Nutzfaktor der Quelle zu optimieren.

In einer der Ausführungsformen ist der Vorderteil des Reflektors konisch ausgebildet, während die Tragschicht der stufenförmigen Linse eine sphärische Form mit dem im Kollimatorbrennpunkt liegenden Mittelpunkt besitzt, wobei für einen jeden Fresnel-Ring eine folgende Beziehung gilt:

$$\sin \lambda = \frac{\sin(\varphi_0 - \varphi)}{\sqrt{n^2 + 1 - 2\sqrt{n^2 - \sin^2(\varphi_0 - \varphi)}}} \quad,$$

wo es bedeutet:

n – Brechungsindex des Linsenwerkstoffs;

$\varphi$ – Winkel, den der auf die Übergangsfläche des Fresnel-Ringes einfallende Brennstrahl mit der Kollimatorachse bildet und der größenmäßig eine Konstante $\varphi_0$ nicht übersteigt, welche dem doppelten Kegelwinkel des Kollimatorvorderteiles gleich ist:

$\lambda$ – Winkel zwischen der Übergangsfläche des Fresnel-Ringes und dem ihm entsprechenden Oberflächenabschnitt der Tragschicht der Linse.

Die sphärische Gestalt der Linsentragschicht gewähr-

-4-

leistet einen gleichen Abstand der Linsenarbeitsfläche von der Lichtquelle, was die Kollimatorkonstruktion hinsichtlich einer höheren Hitzfestigkeit der Kollimatoreinzelteile optimiert.

Bei einer anderen Ausführungsform der Erfindung besitzt die Tragschicht der stufenförmigen Linse die Form eines Rotationsellipsoids, das durch Rotation um die kleine Halbachse entstanden ist und dessen Mittelpunkt mit dem Brennpunkt des Kollimators zusammenfällt, während die große Halbachse zur Kollimatorachse senkrecht ist, wobei das Verhältnis der kleinen und großen Ellipsoidhalbachsen der folgenden Beziehung entspricht:

$$a/b \leqslant \sqrt{\frac{\sqrt{1 - 2n^2 + n^4} - 1}{\sqrt{2 - 3n^2 + n^4}}} \quad ,$$

wo n den Brechungsindex, a und b jewels die kleine und die große Halbachsen des Rotationsellipsoids bedeuten, der Reflektor in Form eines abgeschnittenen Kegels mit einem Kegelwinkel von $45^\circ$ ausgeführt und zwischen dem hinteren Rand des Reflektors und der stufenförmigen Linse eine zu dieser konfokale Ringsammellinse angeordnet ist, deren Kreissymmetrieachse mit der Kollimatorachse zusammenfällt, während die optische Achse deren Profils zur Kollimatorachse senkrecht ist.

Dieser Kollimator besitzt ein höchstes Verhältnis des Lichtöffnungsdurchmessers zu den Axialabmessungen und kann in Gestalt eines einzigen ganzgepreßten Teiles hergestellt sein, in dem die Ringlinse die Funktion einer Brücke zwischen der stufenförmigen Linse und dem Reflektor erfüllt.

Bei einer weiteren Ausführungsform der Erfindung befindet sich der ganze Reflektor vor der Brennebene des Kollimators und ist in Form von katadioptrischen Totalreflexionsringen ausgeführt, von denen ein jeder das Profil eines Prismas mit brechenden Ein- und Austrittsflächen sowie mit einer reflektierenden Fläche besitzt, die die Reflexion der Brennstrahlen unter einem Winkel gewährleitet, der dem Grenztotalreflexionswinkel gleich ist, während die Haupt- und Übergangseintrittsflächen der Fresnel-Ringe der stufenförmigen Linse stumpfe Winkel miteinander bilden, wobei eine folgende Beziehung gilt:

$$tg\ (\varphi + \delta) > \frac{n\ sin\ \zeta - 1}{n\ cos\ \zeta}\ ,$$

$$\zeta = \varphi + \beta - arc\ sin\ \frac{sin\ \beta}{n}\ ,$$

wo es bedeutet:

n - Brechungsindex des Werkstoffs der stufenförmigen Linse;

$\delta$ und $\beta$ - jeweilige Winkel, die die Übergangs- und die Haupteintrittsfläche zweier benachbarter Fresnel-Ringe mit der Kollimatorachse bilden;

- Winkel zwischen dem in den Schnittpunkt dieser Flächen einfallenden Brenstrahl und der Kollimatorachse.

Diese Konstruktion gestattet es, den durch die Außenbeleuchtungsstrahlen bedingten Phantomeffekt zu verhindern, welche Außenbeleuchtungsstrahlen, nachdem sie von außen her in die Lichtöffnung des Kollimators eingetreten sind, nicht mehr als eine Reflexion erfahren wonach sie entweder durch die reflektierende Oberfläche hindurchstrahlen oder durch die Blindöffnung des Reflektors hindurch hinter die Brennebene eindringen und von einem Absorber absorbiert werden können, der die eigene Lichtquelle des Kollimators und den Reflektor von der Seite her umfaßt, die entgegengesetzt zur Lichtöffnung ist. Diese Eigenschaft des Kollimators gestattet es, ihn in den Lichtsignalgeräten anzuwenden, die zum Einsatz unter Außenbeleuchtungsbedingungen (am Tage) bestimmt sind.

-6-

Kurze Beschreibung der Zeichnungen

Weitere Ziele und Vorteile der vorliegenden Erfindung sind aus der nachfolgenden eingehenden Beschreibung ihrer Ausführungsbeispiele und beiliegenden Zeichnungen erkennbar, in denen es zeigt:

Fig.1 den erfindungsgemäßen Kollimator, der aus einem Spiegelreflektor und einer stufenförmigen Linse mit sphärischer Tragschicht besteht;

Fig.2 eine Ausführungsform der Erfindung in Gestalt eines ganzgepreßten Kollimators mit ellipsoidaler Form der Linsentragschicht;

Fig. 3 einen Schnitt nach Linie III-III von Fig.2;

Fig.4 einen Schnitt nach Linie IV-IV von Fig.2;

Fig.5 eine Ausführungsform des Kollimators von Fig.2 mit einer einfacheren Reflektorkonstruktion;

Fig.6 eine Ausführungsform des Antiphantomkollimators;

Fig.7 ein Schema, das die Funktion der Fresnel-Ringe im Kollimator von Fig.6 erläutert.

Beste Ausführungsform der Erfindung

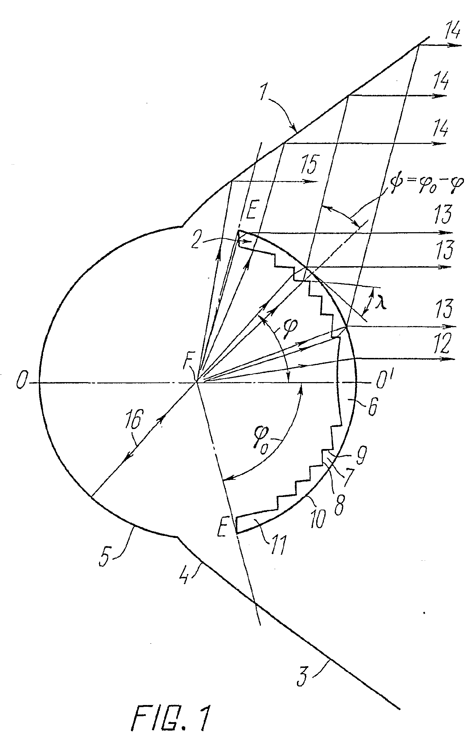

Der Kollimator besteht aus einem konkaven Spiegelreflektor 1 (Fig.1) und einem in dessen Inneren angeordneten konvexen Refraktor in Form einer stufenförmigen Sammellinse 2, die gleichschsig und konfokal zum Reflektor 1 ist (Achse OO', Brennpunkt F). Der Reflektor 1 schließt einen vor der Brennebene des Kollimators befindlichen konischen Vorderteil 3, einen mittleren paraboloidalen Teil 4 und einen hinteren sphärischen Teil ein, der einen Gegenspiegel 5 bildet, wobei sie sämtlich miteinander verbunden sind. Der Refraktor 2 besitzt einen Durchmesser, der dem Durchmesser des Gegenspiegels 5 gleich ist, d.h. er überdeckt die Öffnung im paraboloidalen Reflektor 4, und besteht aus einer zentralen glatten Sammellinse 6 und dioptrischen prispatischen Fresnel--Ringen 7, die an der konkaven Innenfläche der sphärischen Tragschicht (die hinsichtlich der Hitzefestigkeit und Materialeintensität optimal ist) der Linse 2 ausgeführt sind. Jeder Ring 7 besitzt zwei brechende (für

-7-

die aus dem Brennpunkt F kommenden Strahlen) Eintrittsflächen - eine brechende Haupteintrittsfläche 8 und eine
zusätzliche brechende Eintrittsfläche 9. Die Flächen 8
bilden mit der Außenseite 10 der Tragschicht prismatische Ringe, die den Erfassungswinkel der Scheibenlinse
6 vergrößern. Die Flächen 9 (nichtfunktionierende Übergangsflächen hinsichtlich der Funktion der Schneibenlinse) bilden mit derselben Oberfläche 10 brechende
prismatische Ringe, die die Strahlen aus dem Brennpunkt
F auf den konischen Reflektor 3 richten, und zwar parallel zur Achse FE, die unter einem Winkel $\varphi_0$ liegt, der
den Kegelwinkel dieses Reflektors 2 ums doppelte übersteigt. Zum besseren Verbinden des Kegels 3 und des
Paraboloids 4 weist die Übergangsfläche äußersten Fresnel-Ringes (der zur Achse FE am nächsten liegt) eine
Krümmung auf und bildet dabei mit der Oberfläche 10 eine
Halbringlinse 11, die sich ganz vor ihrer optischen Achse FE befindet. Gemeinsem mit den übrigen Flächen 9 bildet sie eigentlich eine zur Scheibenlinse 6 konfokale
stufenförmige Halbringlinse. In dieser Weise stellt jeder
Ring 7 gleichzeitig den Fresnel-Ring zweier Linsen- der
Scheibenlinse 6 und der Ringlinse 11 - dar.

Der Kollimator arbeitet folgenderweise.

Die Strahlen 12, 13 der im Brennpunkt F liegenden
Lichtquelle werden von der Linse 6 sowie von den Hauptflächen 8 der Ringe 7 und der Oberfläche 10 gebrochen
und laufen entlang der Kollimatorachse OO. Strahlen 14
werden von den Übergangsflächen 9 und der Oberfläche 10
auf den konischen Teil 3 des Reflektors 1 gebrochen und
von diesem ebenfalls entlang der Achse OO' reflektiert.
Strahlen 15 werden entlang der Achse OO' unmittelbar
vom Paraboloid 4 reflektiert. Strahlen 16 werden vom Gegenspiegel 5 in der umgekehrten Richtung reflektiert
und wiederholen dann den Weg der Strahlen 12 bis 15. In
dieser Weise wird der gesamte von der Lichtquelle gelieferte Lichtstrom ausgenutzt.

Für den sphärischen Refraktor 2 gilt eine folgende

-8-

gende angenäherte Beziehung (sie ist im Grenzwert seiner unendlich kleiner Dicke genau):

$$\sin \lambda \simeq \frac{\sin \psi}{\sqrt{n^2 + 1 - 2\sqrt{n^2 - \sin^2 \psi}}}$$

wo es bedeutet:

n – Brechungsindex;

$\psi$ – Strahlablenkung durch den Refraktor relativ zur ursprünglichen Richtung;

$\lambda$ – Winkel zwischen der Eintrittsfläche 8 bzw 9 und der Austrittsoberfläche 10 des Fresnel-Ringes 7 (unter der Bedingung, daß die Austrittsoberfläche zur ursprünglichen Strahlrichtung senkrecht verläuft, d.h. die Tragschicht ist).

Ist der Winkel zwischen den Eintrittsflächen 8 bzw. 9 und der Oberfläche 10 kleiner bzw. größer als es durch die Beziehung (I) festgelegt ist, wird die Brechkraft der stufenförmigen Halbringlinse 11 jewels kleiner oder größer als die Nennbrechkraft sein, und für die normale Funktion des Kollimators soll der Vorderteil 3 des Reflektors 1 in der meridionalen Ebene jeweils eine positive bzw. negative Krümmung (Abweichung von der Konizität) aufweisen. Im zwweiten Fall wird eine gewisse zusätzliche Verminderung der Abmessungen erzielt.

Die Herstellung des Refraktors 2 ist nach dem direkten Preßverfahren entlang der Achse OO' aus einem transparenten Kunstoff möglich, wobei zur Vermeidung von negativen Gußschrägen auf die Winkel $\lambda$ zwischen den Eintrittsflächen 9 und der Oberfläche 10 eine Beschränkung $\lambda < 90° - \varphi$ auferlegt wird, wo $\varphi$ den Winkel zwischen der Achse OO' und dem aus dem Brennpunkt F entlang des Radiusvektors eines Fresnel-Ringes austretenden Brennstrahl bedeutet. Unter Berücksichtigung von (I) sowie der Beziehung $\psi = \varphi_0 - \varphi$ bedeutet dies, daß der Winkel $\varphi_0$ zwischen den Achsen OO' und FE des Kolli-

-9-

mators von Fig.1 eine bestimmte Konstante nicht übersteigen darf, die von n abhängt und dem minimalen Wert der folgenden Funktion gleich ist:

$$F(x) = x + \arcsin\left[\cos x\left(\sqrt{n^2 - \cos^2 x} - \sin x\right)\right]$$

wobei im Argumentbereich derselben $0 \leqslant x \leqslant 90°$, d.h.

$$\varphi < \varphi_0 \leqslant \min F(x)$$

Die Beziehung (2) wird durch Einsetzen der Gleichungen $\lambda = 90° - \varphi$ und $\psi = \varphi_0 - \varphi$ in die Beziehung (I) und Lösen derselben als einer Gleichung in bezug auf $\varphi_0$ mit entsprechender Umbezeichnung $\varphi \longrightarrow x$, $\varphi_0 \longrightarrow F(x)$ erhalten. Durch Konstruktion des Kurvenbildes der Funktion (2) für einen vorgegebenen Wert n läßt sich gemäß (3) der Grenzwert $\varphi_0$ (für die Möglichkeit der direkten Preßfertigung des Refrators 2) ermitteln, so $\varphi_0 \leqslant 68°$ für n = 1,5 und $\varphi_0 \leqslant 75°$ für n = = 1,6.

Die kleinsten Axialabmessungen des Reflektors 1 und des ganzen Kollimators lassen sich erzielen, wenn die Achse FE zur Kollimatorachse OO′ senkrecht ist, d.h. bei $\varphi_0 = 90°$. Dieser Wert $\varphi_0$ ist in einem ganzgepreßten Refraktor nur dann erzielbar, wenn das Tragschichtprofil eine in der Querrichtung ausgezogene, der sphärischen gegenüber kompliziertere Form besitzt. Beispielsweise kann die Tragschicht der stufenförmigen Linse 2 die Form eines durch Rotation um die kleine Halbachse erzeugten Rotationsellipsoids besitzen, dessen Mittelpunkt mit dem Brennpunkt des Kollimators zusammenfällt, während die große Halbachse zur Kollimatorachse senkrecht ist. Das Verhältnis der Größen a und b der kleinen und großen Halbachsen hängt jeweils von  n  ab und genügt einer folgenden Ungleichung:

$$a/b \leqslant \sqrt{\frac{\sqrt{1 - 2n^2 + n^4} - 1}{\sqrt{2 - 3n^2 + n^4}}}$$

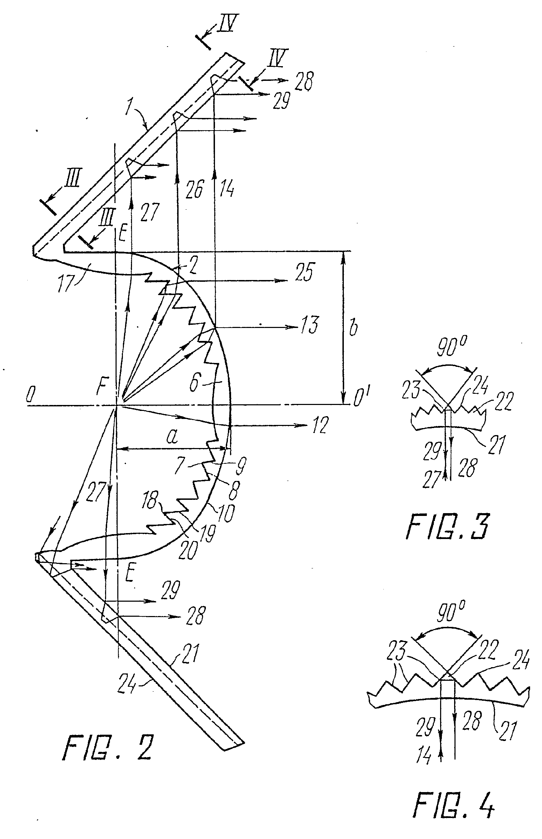

In Fig.2 ist das Profil des ganzgepreßten Kollimators dargestellt. Der katadioptrische konische Reflektor 1 mit einem Kegelwinkel von 45° wird gemeinsam mit dem Refraktor 2 gepreßt, der aus der Scheibenlinse 6, einer zylindrischen Ringlinse 17 ( $\varphi_o$ = 90°) und aus auf der mit diesen Linsen gemeinsamen Tragschicht ausgeführten dioptrischen Fresnel-Ringen 7 mit den brechenden Eintrittsflächen 8 und 9 sowie katadioptrischen Fresnel-Ringen 18 besteht, die eine brechende Eintrittsfläche 19 und eine Totalreflexionsfläche 20 besitzen. Die Vorderfläche 10 der Tragschicht stellt eine gemeinsame brechende Austrittsfläche sämtlicher Ringe 7, 18 und Linsen 6 und 17 dar und besitzt in ihrem vorderen (relativ zur Brennebene) Teil die Form eines (durch die Rotation um die Achse OO' erzeugten) Rotationsellipsoids  mit einem Halbachsenverhältnis a/b = 3/4 (bei n = 1,6), wobei die große Ellipsenhalbachse  b  senkrecht zur Achse OO' steht. Der Reflektort 1 besitzt eine glatte brechende Vorderfläche  21 und eine gerippte hintere Oberfläche (Fig.3,4), die aus radial ausgerichteten katadioptrischen Elementen 22 in Form von Prismen mit zwei reflektierenden Flächen 23 besteht, die an einer zur Vorderfläche 21 parallelen Rippe 24 einander schneiden und einen geraden zweiflächigen Totalreflexionswinkel bilden. Die Querabmessungen eines jeden Elementes 22 nehmen proportional zur Entfernung desselben von der Achse OO' unter entspechender Abnahme der Tragschichtdicke zu.

Die von der Lichtquelle kommenden Strahlen 12, 13 (Fig.2) werden von der Linse 6 und den Flächen 8 der diotrischen Ringe 7 des Refraktors 2 gebrochen. Die von den

Flächen 19 der katadioptrischen Ringe 18 gebrochenen Strahlen 25 werden von den Flächen 20 reflektiert. Nachdem sie eine Brechung an der Vorderfläche 10 der Tragschicht des Refraktors 2 erfahren haben, laufen die Strahlen 12, 13, 25 entlang der Kollimatorachse. Die von der Linse 17 und den Flächen 19 der Ringe 7 gebrochenen Strahlen 27 und 14 sowie die auf die Flächen 19 der Ringe 18 einfallenden, auf die Flächen 20 aber nicht gelangenden Strahlen 26 werden von der Oberfläche 10 gebrochen und laufen unter einem Winkel von 90° zur Achse 00´ zum Reflektor 1, wonach sie von der Vorderfläche 21 des Reflektors 1 gebrochen werden, eine zweifache Reflexion von den Flächen 23 der Elemente 22 erfahren und danach von der Oberfläche 21 erneut nun in Richtung der Achse 00´ (Strahlen 28) gebrochen werden. Ein Teil des Lichtstromes (Strahlen 29) wird von der brechenden Oberfläche 21 in Richtung der Achse 00´ unmittelbar reflektiert, so daß also die Fresnelsche Reflexion von der Oberfläche 21 nicht als Verlust angesehen werden kann. Die vollen Fresnelschen Verluste (am Refraktor 2) betragen ungefähr 13%.

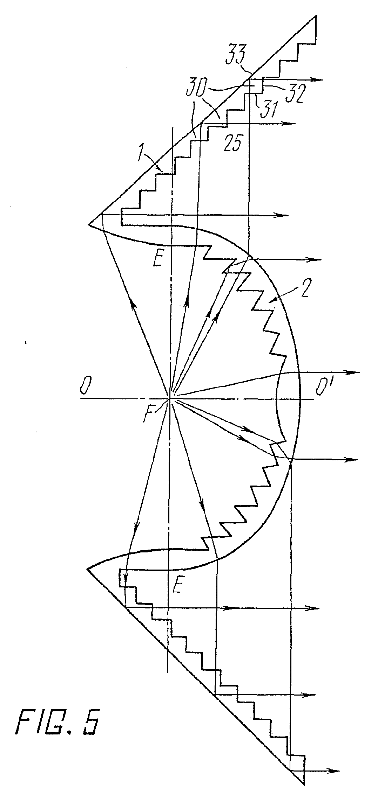

In Fig.5 ist ein Kollimator mit einem gleichen Refraktor 2 wie in Fig.2 dargestellt, der sich von diesem nur dadurch unterscheidet, daß sein Reflektor 1 aus auf einer gemeinsamen Tragschicht ausgeführten katadioptrischen Totalreflexionsringen 30 besteht, deren brechende Eintrittsflächen 31 und Austrittsflächen 32 jeweils parallel bzw. senkrecht zur Kollimatorachse 00´ sind, während die Totalreflexionsfläche 33 mit der hinteren glatten konischen Tragschichtoberfläche übereinstimmt. Ein beliebig genommener Quellenstrahl 25, der nach dem Refraktor 2, senkrecht zur Achse 00´ läuft, fällt auf die Eintrittsfläche 31, ein danach unter einem Winkel von 45° auf die reflektierende Oberfläche 33 und tritt, nachdem er reflektiert worden ist, parallel zur Achse 00´ durch die Fläche 32 desselben bzw. des vorn liegenden benachbarten Ringes 30 je nach dem Auftreffpunkt des Strahls auf der Fläche 31 und der Tragschichtdicke des Reflek-

-12-

tors 1 aus. Der Kollimator von Fig.5 ist in bezug auf die Achse OO´ kreisszmmetrisch und daher einfacher in der Herstellung als der Kollimator von Fig.2, weist aber etwas höhere Fresnelsche Verluste auf, und außerdem erschwert die stufenförmige Vorderfläche des Reflektors die Anwendung desselben in den Leuchtapparaten ohne ein Schutzglas.

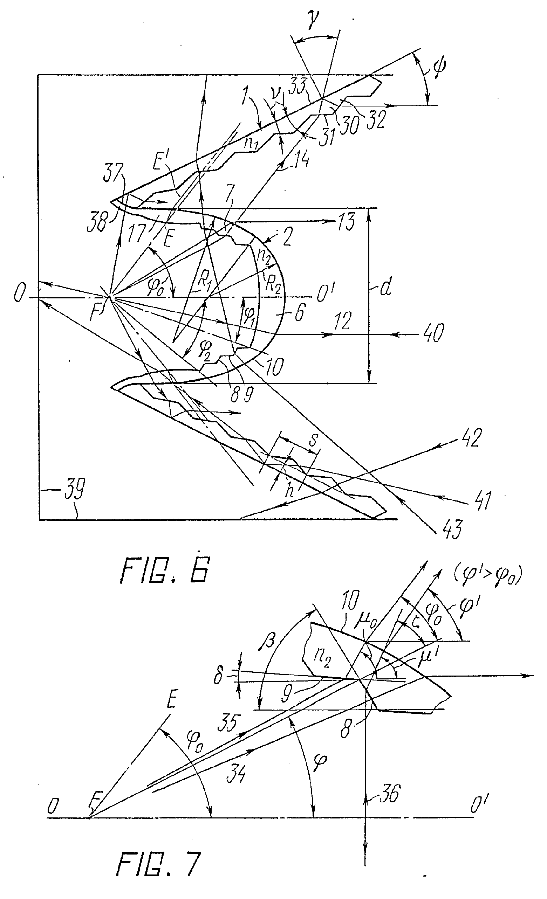

In Fig.6 ist eine Ausführungsform des Antiphantomkollimators dargestellt, in dem die Möglichkeit der Reflexion Außenbeleuchtungsstrahlen im Beobachtungsraum der Lichtsignale beim Anwenden des Kollimators in den Leuchtapparaten ausgeschlossen ist. Der Reflektor 1 und die stufenförmige Linse - der Refraktor 2 - sind aus einem transparenten Werkstoff mit einem Brechungsindex $n_1$ bzw. $n_2$ ausgeführt und liegen voll und ganz vor der Brennebene des Kollimators. Der Refraktor 2 kann aus einem in Signalfarbe gefärbten Werkstoff gefertigt sein, d.h. auch Funktionen eines Lichtfilters erfüllen. Der Kollimator kann ganzgepreßt ausgeführt sein, wobei der Reflektor 1 und der Refraktor 2 aus ein und demselben Werkstoff mit gleichem Brechungsindex ($n_1 = n_2$) hergestellt sind, am besten ist aber eine Kombination, bei der $n_1$ klein, $n_2$ aber groß ist. Der Refraktor 2 besteht aus einer auf einer gemeinsamen Tragschicht ausgeführten Sammellinse 6, die gleichachsig zum Kollimator ist, und einer Ringlinse 17, deren optische Profilachse FE durch den Brennpunkt F des Kollimators unter einem spitzen Winkel $\varphi_0$ zur Achse OO´ des Kollimators verläuft. Die dioptrischen Fresnel-Ringe 7 zwischen den Linsen 6 und 17 dienen zur Vergrößerung der Eintrittsaperturen derselben mit Hilfe jeweils der brechenden Hauptflächen 8 und der Übergangsflächen 9. Zur Verringerung der Projektion der Linse 17 (die entlang der Strahlungsachse OO´ nicht leuchtet) auf die Lichtöffnung des Kollimators ist das Profil der Linse 17 zur Achse OO´ nahezu parallel (so daß die Achse FE unter einem Winkel zu den brechenden Oberflächen der Linse 17 verläuft und an ihnen einen

-13-

Knick EE´ bekommt). Dies wird dadurch erreicht, daß der bezüglich des Mittelpunkts E hintere Profilteil konvex--plan, der dordere Profilteil aber plan-konvex ist, wobei die planen Abschnitte der Achse OO´ nahezu parallel sind (bei einer Abweichung von der Parallelität um einen kleinen Winkel, der für den Gießprozeß entlang der Achse OO´ erforderlich ist), wodurch ein spitzer Winkel $\varphi_0$ mit der Achse FE gebildet wird.

Die Flächen 8 und 9 der Fresnel-Ringe 7 bilden stumpfe Winkel miteinander, die für die Richtigkeit einer folgenden Beziehung ausreichend groß sind:

$$tg\,(\varphi + \delta) > \frac{n_2\,\sin\zeta - 1}{n_2\,\cos\zeta}\ ,$$

$$wo \qquad \zeta = \varphi + \beta - arc\,sin\,\frac{\sin\beta}{n_2}\ ,$$

worin $\delta$ und $\beta$ Winkel bedeuten, die mit der Achse OO´ jeweils Flächen 8 und 9 zweier benachbarter Fresnel--Ringe 7 bilden (sihne Fig.7), $\varphi$ aber den Winkel zwischen dem in den Schnittpunkt der Flächen 9 und 8 einfallenden Brennstrahl und der Achse OO´bedeutet.

Der geometrische Sinn der Beziehung (5) wird in Fig.7 erläutert, wo Brennstrahlen 34 und 35 von den Flächen 8 und 9 der Fresnel-Ringe in solcher Weise gebrochen werden, daß sie nach dem Brechen durch die Oberfläche 10 entlang der Achse OO´ bzw. FE laufen, wobei ein Hilfsstrahl 36, der die Achse OO´ unter rechtem Winkel schneidet, mit der Achse OO´ nach dem Brechen an der Fläche 8 einen größeren Winkel als der Strahl 35 nach dem Brechen an der Fläche 9 $(\mu \geqslant \mu_0)$ bildet.

Der Reflektor 1 (Fig.6) besteht aus katadioptrischen Totalreflexionsringen 30 (die von den durch den Refraktor 2 hindurchgegangegen Strahlen beleuchtet werden), welche eine brechende (Eintrittsfläche 31 und eine brechende Austrittsfläche 32 sowie eine Totalreflexionsfläche 33 besitzen. Die Flächen 33 sämtlicher Ringe 30 bilden eine gemeinsame glatte Oberfläche des Reflektors 1, die konisch mit einem Kegelwinkel $\psi = \varphi_0/2$ ist, wenn die Linse 17 des Refraktors 2 konfokal zum Kollimator ist, wobei die Flächen 31 und 32 mit dieser Oberfläche einen gleichen Winkel $\nu$ bilden.

$$\nu = arc \, tg \, \frac{1 - \cos \psi}{\sqrt{n_1^2 - 1} - \sin \psi}$$

der die Reflexion der Brennstrahlen des Kollimators von der Oberfläche 33 unter einem Winkel $\gamma$ gewährleistet, der dem Grenztotalreflexionswinkel gleich ist:

$$\gamma = arc \sin \frac{1}{n_1}$$

Eine Ausführungsform des Kollimators, deren Konstruktion den Beziehungen (5) bis (8) entspricht, ist in Fig.7 dargestellt und besitzt folgende Parameter: $n_1 = 1,47$; $n_2 = 1,58$; $\gamma = 42°52$; $\varphi_0 = 52°$; $\psi = 26°$; $\nu = 9,0°$. Der Refraktor 2 enthält drei Fresnel-Ringe 7, die die vom Brennpunkt F ausgehenden Strahlen in einem Winkelbereich von $\varphi_1 = 20°$ bid $\varphi_2 = 40°$ relativ zur Achse OO´ abfangen, die Winkel $\beta = 63°$ und $\delta = 1°20´$ für jeden der drei Ringe 7, wobei die Außenfläche ihrer Tragschicht sowie des (vom Punkt E') vorderen Teiles der Linse 17 eine gleichbleibende meridionale Krümmung $R_1 = 0,76$ d besitzt, wo d den Durchmesser des Refraktors 2 bedeutet, und mit der Vorderfläche der Linse 6 mit einem Krümmungshalbmesser $R_2 = 0,4$ d sanft verbunden ist, wobei der Mittelpunkt dieser Krümmung auf der Achse OO´ in einem Abstand 0,52 d vom Brennpunkt F liegt. Der Reflektor 1 enthält sieben katadioptrische Ringe 30, von denen ein jeder außer dem ersten eine Breite S = 0,25 d bei einer Tragschichtdicke h = 0,057 aufweist und brechende Flächen 31 und 32 besitzt, die mit der Reflexionsfläche 33 einen gleichen Winkel $\nu$ = 9,0° bilden. Der erste katadioptrische Ring 30 besitzt eine Eintrittsfläche 37, die an der Stirnseite des Reflektors 1 ausgeführt ist und eine Neigung sowie eine Krümmung besitzt, die die Reflexion der an der Linse 17 nicht gebrochenen Brennstrahlen unter einem Winkel $\gamma$ gewährleistet. Eine Schlußzone 38 des Refraktors 2 dient als Lichtfilter für auf die Fläche 37 einfallende Strahlen und schließt störende Lichtreflexe von der Stirnseite des Refraktors 2 aus.

Die Strahlen 12, 13, 14, die aus der im Brennpunkt F des Kollimators liegenden Lichtquelle kommen, werden vom Refraktor 2 umgewandelt und breiten sich entlang der Achse OO´ entweder direkt oder nach einer Reflexion unter einem Grenzwinkel $\gamma$ von der Oberfläche 33 des Reflektors 1 aus. Die Anwendung des Kollimators in den Antiphantomleuchapparaten setzt das Vorhandensein eines Lichtstrahlenabsorbers 39 voraus, der die Lichtquelle des Leuchtapparates (Brennpunkt F des Kollimators) und den Reflektor 1 von der Seite her umfaßt, die zur Lichtöffnung des Kollimators entgegengesetzt ist. Die Außenbeleuchtungsstrahlen fallen auf den Absorber 39 entweder durch eine Blindöffnung im Reflektor 1 (Strahlen 40, 41) ein oder strahlen durch die Oberfläche 33 desselben hindurch, und zwar dank dem Umstand, daß sie auf dieselbe unter einem als $\gamma$ kleineren Winkel einfallen (Strahlen 42, 43). Die Unmöglichkeit der Reflexion der Außenbeleuchtungsstrahlen in der umgekehrten Richtung auf die Lichtöffnung entlang der Achse OO´ wird dadurch gewährleistet, daß ein Strahl nicht mehr als einmal von der Oberfläche 33 in der meridionalen Ebene reflektiert werden kann. Tatsächlich fällt kraft der Beziehung (5) sogar ein zur Achse OO´ senkrechter Strahl (Strahl 36 in Fig.7) nach allen beidseitigen Brechungen auf die Oberfläche 33 unter einem als $\gamma$ kleineren Win-

-16-

kel, ein, während ein beliebig genommer, zur Achse geneigter Strahl mindestens auf der einen Seite auf die Oberfläche 33 unter einem noch kleineren Winkel einfällt, d.h. durch dieselbe hindurch auf den Absorber 39 leuchtet.

## Gewerbliche Verwertbarkeit

Die Erfindung kann in Leuchtapparaten gerichteter Wirkung - Scheinwerfern, Kfz. - Scheinwerfern, Leuchten - - angewendet werden, in denen ein hoher Wirkungsgrad bei vorhandenen Beschränkungen für die Abmessungsgrößen, insbesondere für die maximalen Axialabmessungen des Kollimators und für die Entfernung der Arbeitsflächen desselben von der Lichtquelle, gewährleistet werden muß; sie kann auch in Lichtsignalgeräten verwendet werden, beispielsweise in Kfz.-Signalleuchten und in Verkehrsampeln, die zum Einsatz unter Außenbeleuchtungsbedingungen bestimmt sind.

-17-

PATENTANSPRÜCHE

1. Kollimator, der einen Reflektor (1) bei dem mindestens dessen Vorderteil (3) sich vor seiner Brennebene befindet, sowie eine im Innern des Reflektors (1) untergebrachte stufenförmige Linse (2) enthält, die an der dem Kollimatorbrennpunkt zugekehrten konkaven Innenseite ihrer Tragschicht Fresnel-Ringe (7) besitzt, von denen jeder eine brechende Haupteintrittsfläche (8) und eine Übergangsfläche (9) hat, dadurch g e k e n n z e i c h n e t , daß die Übergangsflächen (9) der Fresnel-Ringe (7) zusätzliche brechende Eintrittsflächen darstellen und in bezug auf die entsprechenden Abschnitte einer konvexen Oberfläche (10) der Tragschicht der stufenförmigen Linse (2) unter Winkeln liegen, die ausgehend von der Bedingung gewählt sind, die optische Abstimmung des Kollimatorbrennpunktes (F) und des Vorderteiles (3) des Reflektors (1) sicherzustellen.

2. Kollimator nach Anspruch 1, dadurch g e k e n n z e i c h n e t , daß der Vorderteil (3) des Reflektors (1) konisch ausgeführt ist, während die Tragschicht der stufenförmigen Linse (2) eine sphärische Form mit dem Mittelpunkt im Brennpunkt (F) des Kollimators besitzt, wobei für einen jeden Fresnel-Ring (7) eine folgende Beziehung gilt:

$$\sin \lambda = \frac{\sin(\varphi_0 - \varphi)}{\sqrt{n^2 + 1 - 2\sqrt{n^2 - \sin^2(\varphi_0 - \varphi)}}}$$

wo es bedeutet:

$n$ - Brechungsindex;

$\varphi$ - Winkel zwischen dem auf die Übergangsfläche (9) des Fresnel-Ringes (7) einfallenden Brennstrahls und der Kollimatorachse (OO$\int$;

$\varphi_0$ - maximaler Wert von $\varphi$ , der dem doppelten Kegelwinkel des Vorderteiles (3) des Reflektors (1) gleich ist;

$\lambda$ - Winkel zwischen Übergangsfläche (9) des Fresnel--Ringes (7) und dem ihm entsprechenden Abschnitt der Oberfläche (10) der Tragschicht der Linse (2).

3. Kollimator nach Anspruch 1, dadurch g e k e n n - z e i c h n e t, daß die Tragschicht der stufenförmigen Linse (2) die Form eines durch Rotation um die kleine Helbachse (a) erzeugten Rotationsellipsoide besitzt, dessen Mittelpunkt mit dem Brennpunkt (F) zusammenfällt, während die große Halbachse (b) zur Kollimatorachse (OO´) senkrecht ist, wobei das Verhältnis der Halbachsen (a, b) durch eine folgende Beziehung festgelegt ist:

$$a/b \leqslant \sqrt{\frac{\sqrt{1 - 2n^2 + n^4} - 1}{\sqrt{2 - 3n^2 + n^4}}}$$

wo es bedeutet:

n - Brechungsindex;

a und b - jeweils kleine und große Halbachse,

wobei der Reflektor (1) in Form eines abgeschnittenen Kegels mit einem Kegelwinkel von 45° ausgeführt ist, während zwischen dem hinteren Rand des Reflektors (1) und der stufenförmigen Linse (2) eine zu derselben konfokale Ringsammellinse (4) angeordnet ist.

4. Kollimator nach Anspruch 1, dadurch g e k e n n - z e i c h n e t, daß der ganze Reflektor (1) vor der Brennebene des Kollimators liegt und in Gestalt von katadioptrischen Totalreflexionsringen (30) ausgeführt ist, von denen ein jeder das Profil eines Prismas mit eines brechenden Eintrittsfläche (31) und einer brech- enden Austrittsfläche (32) sowie einer Reflexionsfläche (33) zur Reflexion der Brennstrahlen unter einem Winkel besitzt, der dem Grenztotalreflexionswinkel gleich ist, während die Hauptflächen (8) und die Übergangsflächen (9) der Fresnel-Ringe (7) der stufenförmigen Linse (2) stumpfe Winkel miteinander bilden, wobei eine folgende Beziehung gilt:

$$tg\,(\varphi + \delta) > \frac{n\,\sin\,\zeta - 1}{n \cdot \cos\,\zeta}$$

wo $\quad \zeta = \varphi + \beta - arc\,\sin\,\dfrac{\sin\,\beta}{n}$

wo es bedeutet:

n - Brechungsindex der stufenförmigen Linse (2);

$\delta$ und $\beta$ - jeweilige Winkel, die mit der Kollimatorachse (00´) die Übergangseintrittsfläche (9) und die Haupteintrittsfläche (8) zweier benachbarter Fresnel--Ringe (7) bilden;

- Winkel zwischen dem in den Schnittpunkt dieser Flächen (8, 9) einfallenden Brennstrahl und der Kolli-matorachse (00´).

FIG. 1

FIG. 2

FIG.3

FIG. 4

FIG. 5

FIG. 6

FIG. 7

# INTERNATIONAL SEARCH REPORT

International Application No PCT/SU 88/00077

## I. CLASSIFICATION OF SUBJECT MATTER (if several classification symbols apply, indicate all) [6]

According to International Patent Classification (IPC) or to both National Classification and IPC

$IPC^4$ – G 02 B 27/30, F 21 V 5/00

## II. FIELDS SEARCHED

### Minimum Documentation Searched [7]

| Classification System | Classification Symbols |
|---|---|
| $IPC^4$ | G 02 B 27/00, 27/30, 3/08 <br> F 21 V 5/00 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with Indication, where appropriate, of the relevant passages [12] | Relevant to Claim No. [13] |
|---|---|---|
| A | US,A,2224178 (Ralph F.Bitner), 10 December 1940 (10.12.40) see figure 1 | 1-4 |
| A | US,A,3883733 (John Voevodsky) 13 May 1975 (13.05.75), see figures 2,3 | 1-4 |
| A | CH,B5,485236 (VEB Carl Zeiss JENA) 13 March 1970 (13.03.70) see figures 4,5 <br> & US,A,3523721 (11.08.70) | 1-4 |
| A | GB,A,2065858 (Rollei-Werke Franke et al.) 01 July 1981 (01.07.81) see figure 3 | 1-4 |
| A | GB,B,1209377 (Ignacio Goytisolo Taltavull), 21 October 1970 (21.10.70) see figure 5 | 1-4 |
| A | SU,A1,1282051 (Latviisky gosudarstvenny universitet im. P.Stuchki) 07 January 1987 (07.01.87) see the drawing | 1-4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 17 October 1988 (17.10.88) | 28 December 1988 (28.12.88) |

| International Searching Authority | Signature of Authorized Officer |
|---|---|
| ISA/SU | |

Form PCT/ISA/210 (second sheet) (January 1985)